# EUROPEAN PATENT APPLICATION

(11) **EP 3 340 060 A1**
(43) Date of publication of application: **27.06.2018**
(21) Application number: 17205303.5
(22) Date of filing: 04.12.2017
(51) Int. Cl.: G06F 12/0804, G06F 12/0862, G06F 12/0866

(54) **EFFICIENT MEMORY AWARE CACHE MANAGEMENT**

(30) Priority: 21.12.2016 US 201615387429
(71) Applicant: INTEL Corporation, Santa Clara, CA 95054 (US)
(72) Inventor: SHIFER, Eran, 69553 Tel Aviv (IL); VENKATESAN, Ravi K., Bangalore, KA 560103 (IN); POLISHUK, Leon, 3467701 Haifa (IL); NORI, Anant V., Banglore, KA 560103 (IN); LEMPEL, Ori, 31015 Haifa (IL); R, Manikantan, Bangalore, KA 560076 (IN)
(74) Representative: Samson & Partner Patentanwälte mbB

(57) **Abstract**

An indication of a first cache entry to be removed from a cache, the first cache entry corresponding to a first memory address in a memory may be received. A second memory address in the memory based at least in part on the first memory address may be identified. A request to identify a second cache entry in the cache corresponding to the second memory address and to determine whether a removal policy is satisfied may be sent. A response to the request, the response comprising an indication of the second cache entry to be removed from the cache based at least in part on the request may be sent. The first cache entry and the second cache entry from the cache may be removed. Data corresponding to the first and second cache entries to the memory with a single page file access may be written.

## Description

### TECHNICAL FIELD

This disclosure relates to the field of processing devices and, in particular, to managing cached data efficiently by maintaining memory awareness.

### BACKGROUND

A processing device may read data from memory to execute instructions. Data in memory may be accessed multiple times in near succession requiring multiple reads of the same data. Once data is accessed a first time, the data may be cached to maintain a copy of the data for faster accessibility by the processing device, removing the cost of performing multiple reads from memory. Cache memory space is limited and once at capacity, may be managed to keep relevant data cached. Cached data may be evicted to free up cache memory space for new data during management of the cache.

### BRIEF DESCRIPTION OF THE DRAWINGS

The present disclosure is illustrated by way of example, and not by way of limitation, in the figures of the accompanying drawings.
**FIG. 1** is a block diagram illustrating an example system architecture in which implementations of the present disclosure may operate.
**FIG. 2** is a block diagram illustrating an example cache controller in accordance with some implementations of the disclosure.
**FIG. 3A** **i**s a flow diagram illustrating a method to manage cache by determining when to send eviction requests for cache entries, according to an embodiment.
**FIG. 3B** is a flow diagram illustrating a method to manage cache by determining when to evict cache entries based on a received cache eviction request, according to an embodiment.
**FIG. 4** is a block diagram illustrating a memory address identifying a page file and corresponding memory segment containing an entry to be removed from a cache, according to an embodiment.
**FIG. 5** is a diagram illustrating the flow of communication for a cache controller to evict cache entries from a last level cache, according to an embodiment.
**FIG. 6** illustrates a block diagram of the micro-architecture for a processor that includes circuitry in accordance with one embodiment of the disclosure.
**FIG. 7** is a block diagram illustrating a system in which an embodiment of the disclosure may be used.
**FIG. 8** is a block diagram of a system in which an embodiment of the disclosure may operate.
**FIG. 9** is a block diagram of a system in which an embodiment of the disclosure may operate.
**FIG. 10** is a block diagram of a System-on-a-Chip (SoC) in accordance with an embodiment of the present disclosure.
**FIG. 11** is a block diagram of an embodiment of an SoC design in accordance with the present disclosure.
**FIG. 12** illustrates a block diagram of one embodiment of a computer system.

### DETAILED DESCRIPTION

The following description sets forth numerous specific details such as examples of specific systems, components, methods, and so forth, in order to provide a good understanding of several embodiments of the present disclosure. It will be apparent to one skilled in the art, however, that at least some embodiments of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular implementations may vary from these exemplary details and still be contemplated to be within the scope of the present disclosure.

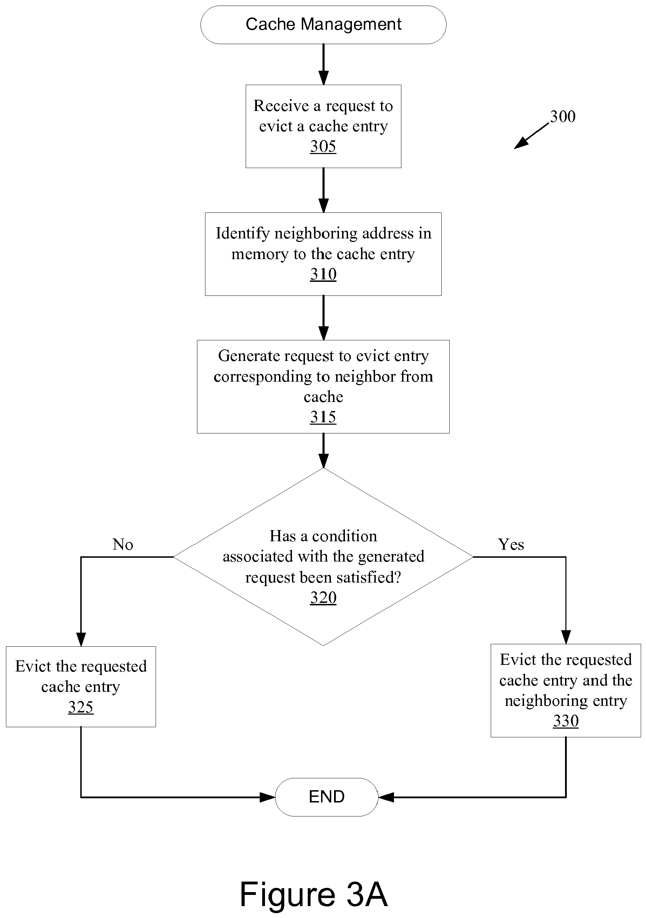

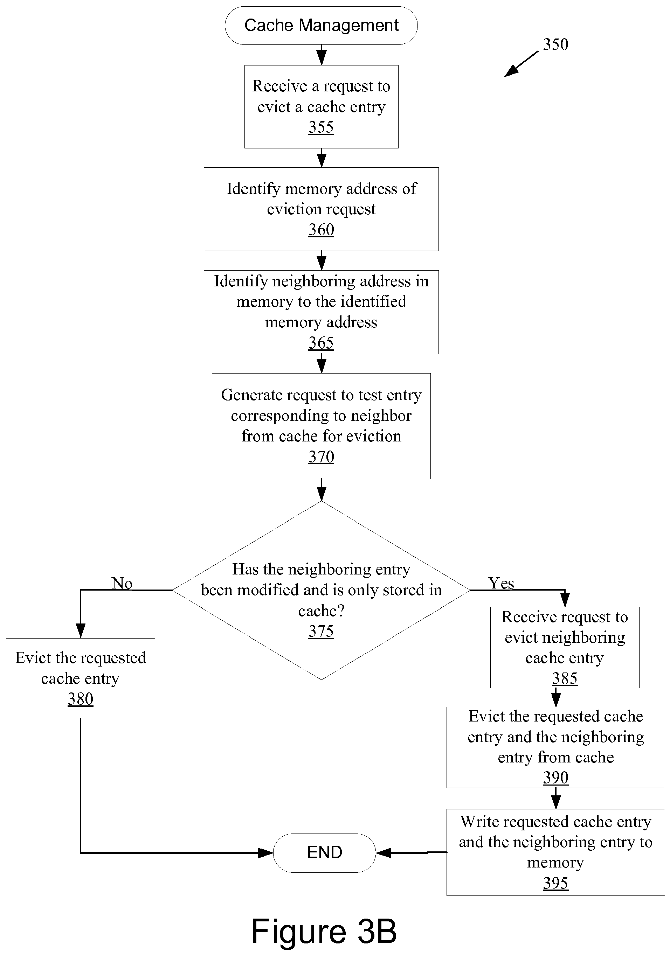

Described herein is a system and method for cache management by maintaining memory awareness. In one embodiment, memory awareness may be used by a processing device to optimize or improve the cache eviction process. Cache memory is a high cost, fast memory which resides on or near the processing device to reduce the time required to access data from main memory. Cache may be split into multiple levels based upon proximity to the processing device or other factors (e.g., latency or cost). For example a level one cache may exist on or nearest to a core of the processing device and for processing devices with more than one core, there may exist a level one cache for each of the cores. A level two cache may exist on the processing device further from the cores than the level one cache or near the processing device further than the level one cache. A level two cache may also be shared between multiple cores. A last level cache may also exist on the processing device further from the cores than the level one and two caches or near the processing device further than the level one and two caches. In other embodiments, the last level cache may also be the level one, level two, or even level N cache. In one embodiment, the last level cache may be shared between all of the cores. Evictions from the last level cache may appear randomly scattered across Dynamic Random Access Memory (DRAM). A scattered access pattern decreases memory efficiency because each page of the DRAM is opened and subsequently accessed a low amount of times before it is closed, thereby accumulating the full cost of opening and closing a page of the DRAM for only a few accesses at a time and reopening the page file for additional accesses. A page, or page file, of DRAM identifies a section of memory which has been loaded into one or more lines of cache. Each page of DRAM may reference many contiguous values of memory which may also reside in the cache. Thus, reliability and efficiency of the last level cache in the processing device and the efficiency of processing device can be increased by accessing cached data from the same page of DRAM as the evicted data. The memory aware cache management is discussed in more detail in conjunctions with **Fig. 3A** and **Fig. 3B** below.

Such a process may improve the reliability of the processing device without having a significant impact on its performance. For example, the page file may reference additional memory values which currently reside in the last level cache and are likely to be subsequently evicted. In one embodiment, the cache entries corresponding to the additional memory values can all be evicted from the cache during the same page file access. The result is an increase in throughput of evictions over time as the evictions are being performed without accruing the costly overhead from multiple page file accesses. For example, a first indication that an eviction from the last level cache may be received. The indication may be an eviction from the last level cache that can be written to DRAM or it may be a corresponding eviction from a cache management policy (e.g., Least Recently Used (LRU) or First-In, First-Out (FIFO)). The page file may be accessed and neighboring memory values of the memory value corresponding to the evicted cache entry may be identified. For example, the memory values as they are indexed around the identified memory value corresponding to the evicted cache entry may be neighboring values or a range of indexes around the identified memory value. A new instruction may be submitted to the last level cache to test the identified neighbors against a removal policy or conditions for eviction. A removal policy may include the conditions for eviction. Reference to conditions herein may also be a reference to a removal policy including those conditions. For example, the values identified as neighbors in memory based on the index of the evicted cache entry may be tested, using a removal policy, for recent use (e.g., whether the cache entry was the most recently accessed, second most recently accessed, or least recently accessed) or against other conditions (e.g., a first indicator to indicate whether a cache entry has been modified in the cache; a second indicator to indicate whether a cache entry is also stored on a core of the processora third indicator to identify a threshold to limit the number of entries being tested). The removal policy or conditions may be adjusted, statically or dynamically, by increasing or decreasing the scope of the conditions using control knobs (e.g., knobs to central processing unit firmware, Basic Input/Output System (BIOS), operating system, or graphics driver), a software profiler, embedded software, or monitoring real time load heuristics. For example, the threshold for the number of entries to be tested may be increased when a graphics driver detects a gather and scatter operation is occurring or decreased during time of high load on the processing device. Neighboring cache entries which satisfy the test and/or conditions may be evicted. Evictions generated as a result of the new instruction have a field toggled to prevent perpetuating an endless cycle of evictions during cache management. For example, a logic bit of the eviction request or eviction notification may be set to a value (e.g., either "1" or "0" as appropriate) to indicate that the eviction is the result of the new instruction.

The original eviction and all subsequent evictions resulting from the new instruction may be written back to memory during the same page file access. Thus, the costly overhead associated with a scattered access pattern of memory accesses is avoided and cache entries are efficiently evicted using a single page file access for multiple evictions.

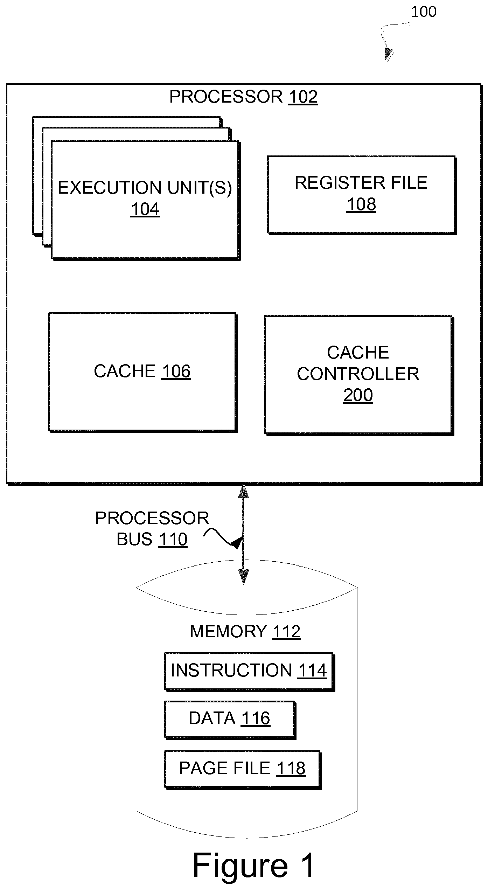

Fig. 1 is a block diagram illustrating a computing system 100 that implements a cache controller 200 for a memory aware cache management scheme to predict cache evictions. The cache controller 200 may be implemented as a cache controller circuit. The computing system 100 is formed with a processor 102 coupled to a main memory 112. Computing system 100 may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines that individually or jointly execute a set (or multiple sets) of instructions to perform any one or more of the methodologies discussed herein.

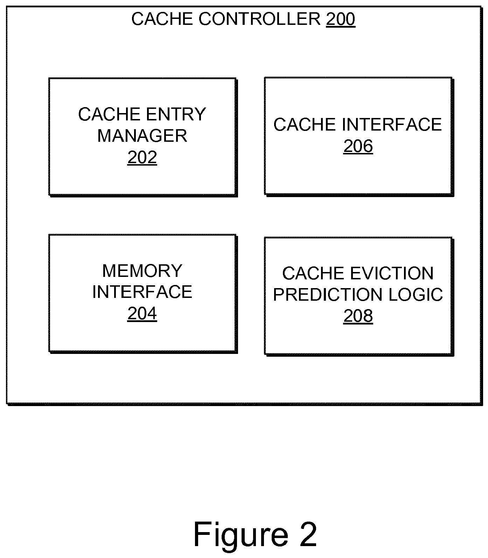

In one embodiment, processor 102 includes one or more execution units 104 to execute a cache eviction in accordance with one or more embodiments as described herein. In one embodiment, processor 102 executes cache controller 200 to determine which cache lines of cache memory 106 to evict according to a memory aware cache management policy. When cache 106 is full of data, new data received from the main memory 112 that is to be written to the cache lines prompts a first eviction. Processor 102 uses controller 200 to determine which neighboring addresses in memory to test for eviction. The neighboring addresses in memory may be adjacent to, near to, or located in the same page file as the memory address corresponding to the data evicted from cache memory 106 in the first eviction. Additional details with regard to cache controller 200 are described in more detail below with respect to **Figs. 2 - 5****.**

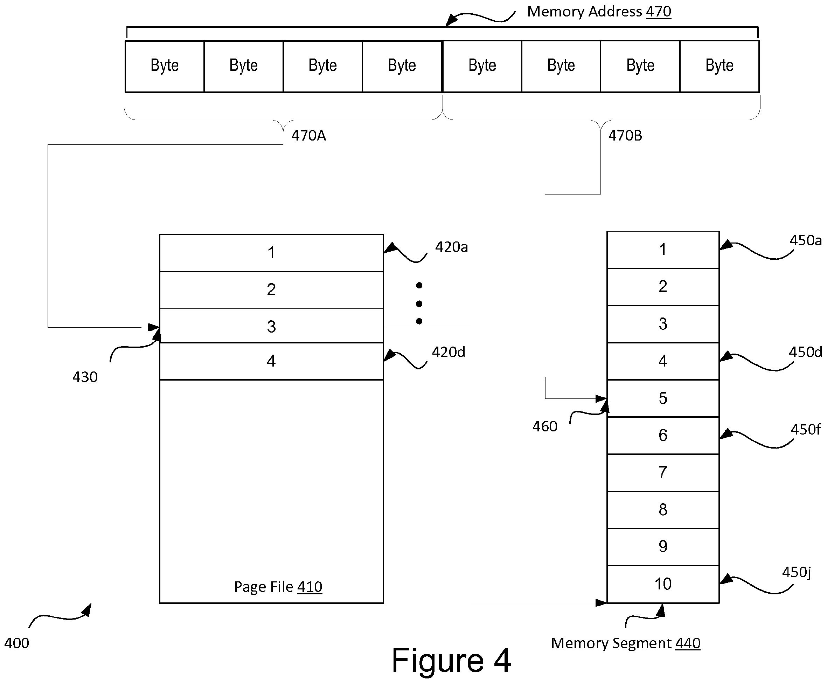

In the illustrated embodiment of **Fig. 1**, processor 102 includes one or more execution units 104 to implement a process that is to perform at least one instruction. One embodiment may be described in the context of a single processor desktop or server system, but alternative embodiments may be included in a multiprocessor system. System 100 may be an example of a 'hub' system architecture. The computer system 100 includes a processor 102 to process data signals. The processor 102, as one illustrative example, includes a complex instruction set computer (CISC) microprocessor, a reduced instruction set computing (RISC) microprocessor, a very long instruction word (VLIW) microprocessor, a processor implementing a combination of instruction sets, an out of order based processor, or any other processor device, such as a digital signal processor, for example. The processor 102 is coupled to a processor bus 110 that transmits data signals between the processor 102 and other components in the system 100, such as main memory 112 storing instruction 114, data 116, page file 118 or any combination thereof. Additional details with regard to a page file 118 are described in more detail below with respect to **Fig. 4** below. The other components of the system 100 may include, but are not limited to, a graphics accelerator, a memory controller hub, an I/O controller hub, a wireless transceiver, a Flash BIOS, a network controller, an audio controller, a serial expansion port, and an I/O controller.

Processor 102 may employ execution units including circuitry to perform algorithms for processing data, such as in the embodiments described herein. Processor 102 is representative of processing systems based on the PENTIUM III™, PENTIUM 4™, Xeon™, Itanium, XScale™ and/or StrongARM™ microprocessors available from Intel Corporation of Santa Clara, California, although other systems (including PCs having other microprocessors, engineering workstations, set-top boxes and the like) may also be used. In one embodiment, computing system 100 executes a version of the WINDOWS™ operating system available from Microsoft Corporation of Redmond, Washington, although other operating systems (e.g., UNIX, Linux, and iOS), embedded software, and/or graphical user interfaces, may also be used. Thus, embodiments of the present invention are not limited to any specific combination of hardware circuitry and software.

Processor 102 may further include cache memory 106, register file 108 and cache controller 200. Cache 106 may be a specialized memory unit used by processor 102 to reduce the average memory access times. Cache 106 may be a smaller, faster memory which stores copies of data from the most frequently used locations in main memory 112. Data may be transferred between memory 112 and cache 106 in blocks of fixed size, called cache lines. When a cache line is copied from memory 112 into cache 106, a cache entry is created. The cache entry may include the copied data as well as the requested memory location. When processor 102 needs to read from or write to a location in memory 112, processor 102 may first check whether a copy of the relevant data is currently in cache 106. If the data is found in cache 106, processor 102 may read from or write to the cache 106. These cache accesses may typically be much faster than reading from or writing to memory 112. In one embodiment, as long as most memory accesses are cached memory locations, the average latency of memory accesses will be closer to the cache latency than to the latency of main memory. In one embodiment, the processor 102 includes a Level 1 (LI) internal cache memory 106. Depending on the architecture, the processor 102 may have a single internal cache memory or multiple levels of internal cache memories (e.g., L1 and L2). For example, the processor 102 may include an instruction cache (e.g., an L1 instruction cache) and a data cache (e.g. an L1 data cache) as part of its L1 internal cache memory. Other embodiments include a combination of both internal and external caches depending on the particular implementation and needs. Register file 108 is to store different types of data in various registers including, but not limited to, integer registers, floating point registers, vector registers, banked registers, shadow registers, checkpoint registers, status registers, configuration registers, and instruction pointer registers.

Cache 106, however, may be limited in size and/or capacity. Thus, in order to make room for a new entry on a cache miss, one of the existing entries in cache 106 may have to be evicted. In one embodiment, cache controller 200 may determine which cache line to evict based on a replacement policy. The fundamental problem with any replacement policy is that it must predict which existing cache entry is least likely to be used in the future. One popular replacement policy is known as least-recently used (LRU) and replaces the least recently accessed entry. Other replacement policies may include most recently used, least frequently used, random replacement, or some other policy.

Execution unit 104, including circuitry to perform integer and floating point operations, also resides in the processor 102. It should be noted that the execution unit may or may not have a floating point unit. The processor 102, in one embodiment, includes a microcode (µcode) ROM to store microcode, which when executed, is to perform processes for certain macroinstructions or handle complex scenarios. Here, microcode is potentially updateable to handle logic bugs/fixes for processor 102. Alternative embodiments of an execution unit 104 may also be used in micro controllers, embedded processors, graphics devices, DSPs, and other types of logic circuits.

System 100 further includes a main memory 112. Main memory 112 may include, but is not limited to, a dynamic random access memory (DRAM) device, a static random access memory (SRAM) device, flash memory device, or other memory device. Main memory 112 stores instructions, data, and/or page file represented by data signals that are to be executed by the processor 102. The processor 102 is coupled to the main memory 112 via a processor bus 110. A system logic chip, such as a memory controller hub (MCH) may be coupled to the processor bus 110 and main memory 112. An MCH can provide a high bandwidth memory path to memory 112 for instruction and data storage and for storage of graphics commands, data and textures. The MCH can be used to direct data signals between the processor 102, main memory 112, and other components in the system 100 and to bridge the data signals between processor bus 110, main memory 112, cache memory 106, and system I/O, for example. The MCH may be coupled to main memory 112 through a memory interface. In some embodiments, the system logic chip can provide a graphics port for coupling to a graphics controller through an Accelerated Graphics Port (AGP) interconnect. The system 100 may also include an I/O controller hub (ICH). The ICH can provide direct connections to some I/O devices via a local I/O bus. The local I/O bus is a high-speed I/O bus for connecting peripherals to the main memory 112, chipset, and processor 102. Some examples are the audio controller, firmware hub (flash BIOS), wireless transceiver, data storage, legacy I/O controller containing user input and keyboard interfaces, a serial expansion port such as Universal Serial Bus (USB), and a network controller. The data storage device can comprise a hard disk drive, a floppy disk drive, a CD-ROM device, a flash memory device, or other mass storage device.

For another embodiment of a system, the cache controller 200 may be used with a system on a chip. The memory for one such system may be a flash memory. The flash memory may be located on the same die as the processor and other system components. Additionally, other logic or circuitry blocks, such as a memory controller or graphics controller, may also be located on a system on a chip.

**Fig. 2** is an example cache controller in accordance with some implementations of the disclosure. In general, the cache controller 200 may correspond to the cache controller 200 of a processor 102 as shown in **Fig. 1****.** In one embodiment, the cache controller 200 includes a cache entry manager 202, a memory interface 204, a cache interface 206, and a cache eviction prediction logic 208. In alternative implementations, the functionality of one or more of the components may be combined or divided.

As shown in **Fig. 2****,** the cache controller 200 may include a cache entry manager 202 that may manage the cache entries of cache 106. Cache management includes the receipt of new cache entries to store in the cache 106, tracking of the cache entries in the cache 106 for cache entry characteristics, and curating the cache entries. For example, entries may be stored in the cache 106 when an instruction requests new data from memory to be read. Data may be read as a series of bytes (e.g., 4/8 byte values) or as a contiguous chunk of memory (e.g., 32 bytes, 64 bytes, 100 bytes). Cache entries may have a timestamp establishing when they were first stored into cache, a timestamp indicating when the entry was last used or how many times the entries have been used, and an indication of whether the values are clean (e.g., have not been changed while stored in cache) or dirty (e.g., have been modified while in cache). Cache entries may be curated according to cache replacement algorithms or policies (e.g., First In First Out (FIFO), Last In First Out (LIFO), Least Recently Used (LRU), Most Recently Used (MRU), Random Replacement (RR), Least-Frequently Used (LFU), or other algorithms).

The memory interface 204 may communicate with memory 112 over processor bus 110. The memory interface 204 may receive or send data which is managed by cache entry manager 202. For example, memory interface 204 may receive a new cache to be stored in the cache 106 or send an evicted cache entry to memory 112 to be stored. The memory interface 204 may utilize page file 118 or a table for mapping a cache entry index to a corresponding memory address. The page file 118 or table may alternatively be stored in memory 112, cache interface 206, cache controller 200, or in the processor 102. Memory interface 204 may further identify addresses in memory based off a physical address or an index with a pointer to memory. For example, processor 102 may receive an eviction request that includes an indication of a cache entry to evict from cache 106. The cache entry manager 202 may identify the cache entry using an index to a corresponding cache line. The memory interface 204 may determine the physical memory address corresponding to the cache entry from the page file 118 by referencing a table mapping an index of each cache line with a physical memory address in memory where the data is stored. Neighboring memory addresses may be determined by incrementing or decrementing the index value or incrementing or decrementing across of range of index values to identify addresses of the same page file that are located in close proximity in memory 112. Neighboring memory addresses may also be spaced in memory according to the result of a hashing operation (e.g., neighbors may be spread across several nearby addresses at index values -3, +1, +5, +6, and +10) and may not reside immediately adjacent to the physical memory address. Data removed from the cache 106 may be written back to memory 112 by writing the evicted value to the corresponding physical memory address.

The cache interface 206 may communicate with cache 106. The cache interface 206 may receive or send data which is managed by cache entry manager 202. For example, the cache entry manager 202 may receive a new cache entry to be stored in the cache or may remove an evicted cache entry from the cache using the cache interface 206. Evicted cache entries may include the data of the entry and the index to the location in the cache or the physical address in memory. The index may be referenced against the page file or table to determine the physical memory address where the value may be stored in memory.

The cache eviction prediction logic 208 may monitor the cache interface 206, memory interface 204, and/or the cache entry manager 202 for cache eviction indications or requests. For example, the cache eviction prediction logic 208 may intercept an eviction request when an indication of a cache eviction is detected at any of the cache entry manager 202, memory interface 204, and cache interface 206. The cache eviction prediction logic 208 may open a page file to identify neighboring addresses in memory to the evicted cache entry. Extracting neighboring addresses from the page file is discussed in more detail in conjunction with **Fig. 4** below. The cache eviction prediction logic may further generate an instruction to test cache entries corresponding to each of the identified neighboring addresses for eviction and may send the instruction to the cache using the cache interface 206. The instruction may have a field identifying that the eviction request is generated based off of an earlier eviction notification to prevent a runaway chain reaction of evictions that continually generating additional eviction requests and so on. The instruction may not be available to software running on the processing device. For example, the INC opcode is accessible to software for performing an increment of a value. In one implementation, the instruction may not be executed at a software level or the instruction may only be a hardware instruction. Further the instruction may not require a response and may be dropped at the cache if the cache is experiencing heavy traffic.

In an alternative embodiment, the cache eviction prediction logic 208 may receive a cache entry to be evicted. For example, an indication of a cache entry to be removed may be received from the cache entry manager 202. The cache eviction prediction logic 208 may identify neighboring memory addresses using the index of the cached entry to determine neighboring addresses in memory using the page file. The cache eviction prediction logic 208 may further generate a new instruction using each of the neighboring addresses and send the new instruction to the cache 106. In another implementation, the cache eviction prediction logic 208 may generate and send the instructions to each line of cache individually or to all cache lines. The instructions may further be limited to at most a threshold amount of cache lines.

**FIG. 3A** is a flow diagram illustrating a method to manage cache by determining when to send eviction requests for cache entries. The method 300 may be performed by processing logic, or circuitry, that may include hardware (e.g., processing device, circuitry, dedicated logic, programmable logic, microcode, etc.), software (e.g., instructions run on a processing device), or a combination thereof. In some implementations, the method 300 may be performed by the cache controller 200 of **Figs. 1** or **2**.

For simplicity of explanation, the methods of this disclosure are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events.

As shown in **Fig. 3A****,** the method 300 may begin with the processing logic, or circuitry, receiving a request to evict a cache entry (block 305). For example, the cache eviction prediction logic 208 may intercept or receive an eviction notification and use the notification in the subsequent method steps. Eviction requests may originate from an operation in the processor which identifies a memory address not in the cache and the cache controller subsequently initiates the eviction of a least recently used cache entry during a cache curating operation. The processing logic, or circuitry, may further identify a neighboring address in memory 112 to the memory address corresponding to the evicted cache entry (block 310). For example, the values identified as neighbors in memory may be neighbors according to the index of the evicted cache entry in memory and the neighbor values can be the immediate addresses on either side of the index or a range of addresses to either side of the index in memory. The processing logic, or circuitry, may further generate the request to evict cache entries corresponding to neighbor addresses from the cache (block 315). For example, the cache eviction prediction logic may generate an instruction to identify the cache entries corresponding to neighbor addresses by a physical memory address or a cache index value. The processing logic, or circuitry, may further determine whether a condition associated with the generated request has been satisfied (block 320). For example, the condition may be whether the neighbor values exist in the cache, whether the neighbor values have been modified, or whether the neighbor values have been accessed recently. The cache controller 200 may test the condition alone or as a group of conditions. The condition may be satisfied if any one of the condition is satisfied or may be satisfied if only all of the conditions are satisfied. Upon successful determination that the condition has not been satisfied, the processing logic, or circuitry, may further evict the originally requested cache entry (block 325) and the method 300 would end. Upon successful determination that the condition has been satisfied, the processing logic, or circuitry, may further evict the originally requested cache entry and the neighboring entry (block 330) and the method 300 would end. In further implementations, the processing logic, or circuitry, associated with method 300 may enter a low power state upon completion and come out of the low power state upon resuming. The method 300 may also wait for another eviction request to be intercepted or received to resume processing at block 305.

**FIG. 3B** is a flow diagram illustrating a method to manage cache by determining when to evict cache entries based on a received cache eviction request. The method 300 may be performed by processing logic, or circuitry, that may include hardware (e.g., processing device, circuitry, dedicated logic, programmable logic, microcode, etc.), software (e.g., instructions run on a processing device), or a combination thereof. In some implementations, the method 300 may be performed by the cache controller 200 of **Figs. 1** **or** **2****.**

**As** shown in **Fig. 3B****,** the method 350 may begin with the processing logic, or circuitry, receiving a request to evict a cache entry (block 355). For example, the cache eviction prediction logic may intercept or receive an eviction notification and use the eviction notification in the subsequent method steps. The processing logic, or circuitry, may further identify the memory address of eviction address (block 360). For example, the cache eviction prediction logic may extract the memory address from an indication identifying a cache entry to be evicted. Extracting neighboring addresses from the page file is discussed in more detail in conjunction with **Fig. 4** below. The processing logic, or circuitry, may further identify a neighboring address in memory to the identified memory address (block 365). For example, the values identified as neighbors in memory may be neighbors according to the index of the evicted cache entry and the neighbor values can be the immediate addresses on either side of the index or a range of addresses to either side of the index. The cache eviction prediction logic may access the page file to determine which memory segment is loaded into cache and any neighboring addresses to the identified memory address in that memory segment. The processing logic, or circuitry, may further generate the request to test entries corresponding to neighbor from cache for eviction (block 370). For example, the cache eviction prediction logic may generate an instruction identifying the cache entries corresponding to neighboring addresses by a physical memory address or a cache index value. The instruction may request an eviction and the conditions for eviction to be handled outside of the instruction (e.g., testing conditions as an operation of the eviction determination based on preferences or configuration/settings) or the instruction may request that the conditions for eviction be tested (e.g., testing conditions are specified in the instruction). The processing logic, or circuitry, may further determine whether the neighboring entry has been modified and is only stored in the cache (block 375). For example, the condition is tested when the neighbor values exist in the cache and must determine whether the neighbor values have been modified by checking a status bit indicating a clean or dirty state of the cache entry or whether the neighbor values exist in another level of cache elsewhere indicating an eviction requires further processing (e.g., terminating the testing, evicting from one location and updating the other location, or evicting from both locations). The condition may be tested alone or may be tested as a group of conditions. The condition may be satisfied if any one of the condition is satisfied or may be satisfied if only all of the conditions are satisfied. Upon successful determination that the condition has not been satisfied, the processing logic, or circuitry, may further evict the originally requested cache entry (block 380) and the method 300 would end. Upon successful determination that the condition has been satisfied, the processing logic, or circuitry, may further receive request to evict neighboring cache entry (block 385). For example, the request may be received by either receiving the request directly or intercepting the request. The request may be an instruction or it may be a notification. For example, if the request is an instruction, the instruction may include a field identifying the address of the cache element to be evicted, a field identifying the instruction should not generate new instructions of the same type (e.g., to avoid perpetually generating new instructions), and an optional field identifying conditions which may be tested during the determination of eviction. The instruction may be received at the last level cache and executed or dropped. An instruction may be dropped if the cache is experiencing heavy load from multiple cache accesses. An instruction may be executed and the identified neighboring address tested for eviction according the the conditions specified (or according to default conditions set in a configuration or settings file or parameters. The processing logic, or circuitry, may further evict the originally requested cache entry and the neighboring entry (block 390). For example, the cache eviction prediction logic may access the page file to identify the memory address of the eviction and any neighboring memory addresses. The page file maps the cache index to a physical memory address. The processing logic, or circuitry, may further write the requested cache entry and the neighboring entry to memory (block 395) and the method 300 would end. In further implementations, the processing logic, or circuitry, associated with method 300 may enter a low power state upon completion and come out of the low power state upon resuming. The method 300 may also wait for another eviction request to be intercepted or received to resume processing at block 355.

**Fig. 4** illustrates an example graphical representation 400 representing a memory address for identifying a page file and corresponding memory segment containing an entry to be removed from a cache. In general, the graphical representation corresponds to the identification of neighboring cache entries provided by the cache controller 200 of **Figs. 1** and **2****.**

As shown in **Fig. 4****,** the graphical representation 400 may provide a received memory address 470 identifying a cached entry to be evicted. A page file 410 may include a single index or many indexes 420a-d identifying which location of memory have been cached. Memory segment 440 may correspond to one of the indexes (e.g., index 430). Memory segment may include one or more indexes 450a-j identifying elements of the corresponding memory segment which was cached. For example, a memory value may be read from memory in response to an instruction request. A memory value 460 may be cached alone or along with neighboring values 450a-j to increase the speed with which memory address 460 or neighboring values 450a-j are accessed in the future. Memory address 460 may be evicted from cache and identified at memory address 470 in the eviction instruction, request, or notification. For convenience, the eviction instruction will be referenced as an instruction solely. One of ordinary skill in the art would understand that an instruction may similarly be implemented as a request or notification. For the purposes herein, the eviction instruction may be embodied as an eviction request or an eviction notification. A page file may be updated to include another entry (e.g., 420d) when a segment of memory has at least one entry loaded into cache. The memory address 470 may identify which entry of the page file 410 corresponds to the cache entry to be evicted. For example, a first field 470A may address the page file 410 and may provide an offset to the page file to identify the location of the page file entry 430 which may be associated with the cache entry to be evicted. In other implementations, the first field 470A may provide a pointer to the page file and an offset to determine which entry of the page file is referenced or may provide an address to the page file entry 430 directly. Page file entry 430 may identify a pointer to a segment of memory which had previously been cached. Memory address 470 may further identify which element of the memory segment is to be evicted from cache. For example, a second field 470B may provide an index to a memory segment pointed to from the first field 470A. In another implementation, the second field 470B may directly address a memory segment 440 and provide an offset to identify memory address 460. The second field 470B may also directly address memory address 460. Memory address 470 may not include both fields 470A and 470B in their entirety or in part and may address the cache entry to be evicted according to the implementation of the page file or cached memory segment management as would be understood to one of ordinary skill in the art.

Referring to **Fig. 4****,** a neighboring cache entry or address to the evicted cache entry may be identified at memory segment 440. For example, a notification may indicate that a cache entry corresponding to a memory address 460 is to be evicted. Memory address 460 is indexed from the cached memory segment 440 at an index 5. A neighboring memory address or cached entry may be identified at index 4 (450d) or index 6 (450f) as they are the immediately adjacent neighboring entries to the identified memory address 460. In another implementation, index 1-4 and 6-10 (450a-j) may be identified together, or in part, as neighboring entries.

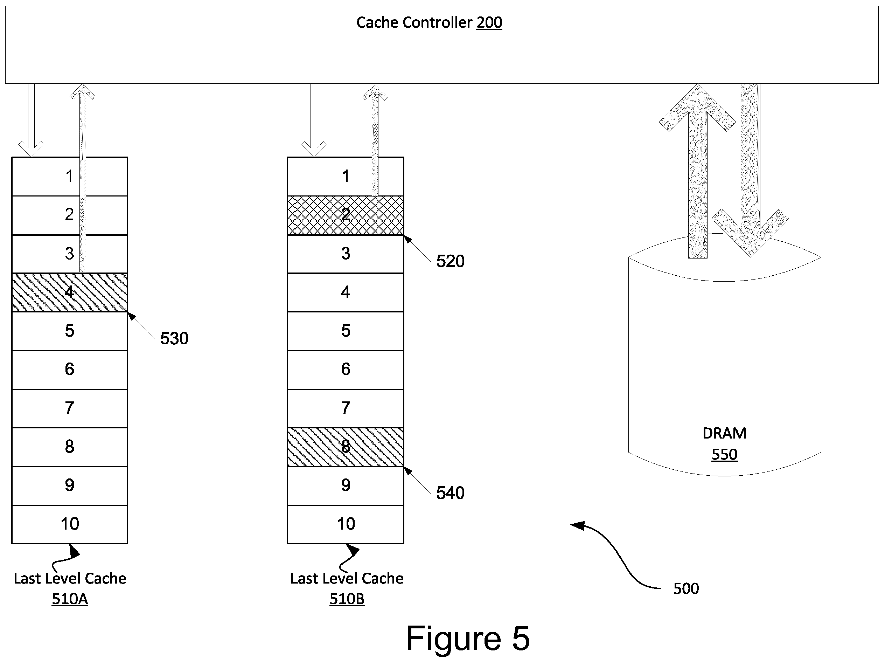

**Fig. 5** illustrates an example graphical representation 500 representing a cache controller communicating eviction notifications, requests, and instructions with lines of a last level cache. In general, the graphical representation corresponds to the eviction of a cache entry and subsequent neighboring entries by the cache controller 200 of **Figs. 1** and **2****.**

Referring to **Fig. 5****,** a cache controller 200 may pass instructions, new cache entries, or cache evictions to and from lines of a Last Level Cache (LLC) 510A-B. LLC 510A-B may include one or more cache entries indexed 1-10. New cache entries may be read from DRAM 550 and stored in an available cache index of the LLC. For example, cache controller 200 may pass an eviction notification for cache index 2 (e.g., 520) of LLC 510B to the LLC. A cache hit may occur and the value stored at index 2 (520) may have been modified, triggering an eviction and subsequent write to DRAM 550. LLC 510B may then provide notification to cache controller 200 that cache element 520 is to be evicted and written back to memory. Cache controller 200 may receive the eviction notification from LLC 510B and access a page file associated with the cache line to determine neighboring addresses in memory to the address identified in the eviction notification (as shown in **Fig. 4****).** Neighboring addresses may be identified and an instruction generated to be sent to each LLC 510A-B to test cache entries corresponding to the neighboring memory addresses for eviction. LLC 510B may detect an entry corresponding to a neighboring memory address at cache index 8 (540) but a test for eviction may be unsuccessful (e.g., the value had not been modified in cache or the value had recently been modified and failed a condition to only evict inactive, less recently used, cache elements) and drop the instruction. In one embodiment, no response may be sent when a tested condition fails. LLC 510A may further detect a neighboring address at cache index 4 (530) and a test for eviction may be successful (e.g., the value had been modified in cache and the value was not recently modified) and a response may be generated to the instruction. The response to the instruction may be an eviction notification. In other implementations, the response may include a toggle, field, or bit which is set to indicate the eviction notification is a result of an instruction to test neighboring addresses for eviction. The eviction may be implemented as a detection that the cache entries corresponding to a neighboring memory address exist in a modified cache state (e.g., dirty state) and upon detection, the state may transition from the modified cache state to an exclusive cache state (e.g., clean state) and the response to the instruction may indicate a transition from the modified to exclusive state along with the corresponding value to be written back to memory. At a later point in time, the cache controller may decide to evict the neighboring cache entry at the exclusive state and perform a silent eviction where the entry is erased or overwritten without updating the memory. The cache controller 200 may receive the eviction notification and suppress the generation of additional instruction to test neighboring addresses for eviction based on the set toggle, field, or bit to prevent a runaway chain of evictions. Cache controller 200 may then write both the eviction for cache entry 520 and cache entry 530 to DRAM 550 during a single page file access and close the page file.

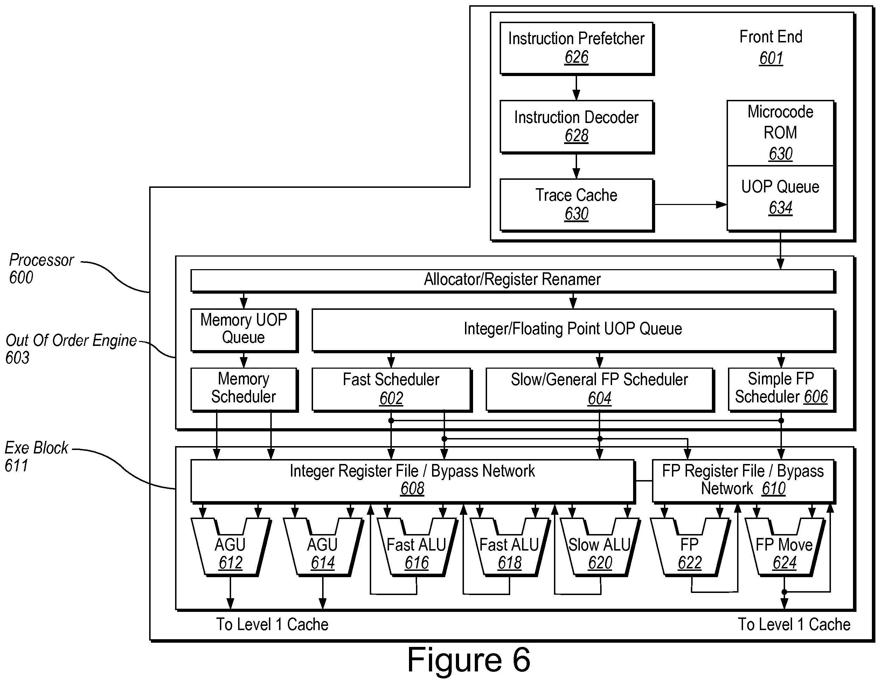

**Figure 6** illustrates a block diagram of the micro-architecture for a processor 600 that includes hybrid cores in accordance with one embodiment of the disclosure. In some embodiments, an instruction in accordance with one embodiment can be implemented to operate on data elements having sizes of byte, word, doubleword, quadword, etc., as well as datatypes, such as single and double precision integer and floating point datatypes. In one embodiment the in-order front end 601 is the part of the processor 600 that fetches instructions to be executed and prepares them to be used later in the processor pipeline.

The front end 601 may include several units. In one embodiment, the instruction prefetcher 626 fetches instructions from memory and feeds them to an instruction decoder 628 which in turn decodes or interprets them. For example, in one embodiment, the decoder decodes a received instruction into one or more operations called "micro-instructions" or "micro-operations" (also called micro op or uops) that the machine can execute. In other embodiments, the decoder parses the instruction into an opcode and corresponding data and control fields that are used by the micro-architecture to perform operations in accordance with one embodiment. In one embodiment, the trace cache 630 takes decoded uops and assembles them into program ordered sequences or traces in the uop queue 634 for execution. When the trace cache 630 encounters a complex instruction, the microcode ROM 632 provides the uops needed to complete the operation.

Some instructions are converted into a single micro-op, whereas others need several micro-ops to complete the full operation. In one embodiment, if more than four micro-ops are needed to complete an instruction, the decoder 628 accesses the microcode ROM 632 to do the instruction. For one embodiment, an instruction can be decoded into a small number of micro ops for processing at the instruction decoder 628. In another embodiment, an instruction can be stored within the microcode ROM 632 should a number of micro-ops be needed to accomplish the operation. The trace cache 630 refers to an entry point programmable logic array (PLA) to determine a correct micro-instruction pointer for reading the micro-code sequences to complete one or more instructions in accordance with one embodiment from the micro-code ROM 632. After the microcode ROM 632 finishes sequencing micro-ops for an instruction, the front end 601 of the machine resumes fetching micro-ops from the trace cache 630.

The out-of-order execution engine 603 is where the instructions are prepared for execution. The out-of-order execution logic has a number of buffers to smooth out and reorder the flow of instructions to optimize performance as they go down the pipeline and get scheduled for execution. The allocator logic, or circuitry, allocates the machine buffers and resources that each uop needs in order to execute. The register renaming logic, or circuitry, renames logic registers onto entries in a register file. The allocator also allocates an entry for each uop in one of the two uop queues, one for memory operations and one for non-memory operations, in front of the instruction schedulers: memory scheduler, fast scheduler 602, slow/general floating point scheduler 604, and simple floating point scheduler 606. The uop schedulers 602, 604, 606, determine when a uop is ready to execute based on the readiness of their dependent input register operand sources and the availability of the execution resources the uops need to complete their operation. The fast scheduler 602 of one embodiment can schedule on each half of the main clock cycle while the other schedulers can only schedule once per main processor clock cycle. The schedulers arbitrate for the dispatch ports to schedule uops for execution.

Register files 608, 610, sit between the schedulers 602, 604, 606, and the execution units 612, 614, 616, 618, 620, 622, 624 in the execution block 611. There is a separate register file 608, 610, for integer and floating point operations, respectively. Each register file 608, 610, of one embodiment also includes a bypass network that can bypass or forward just completed results that have not yet been written into the register file to new dependent uops. The integer register file 608 and the floating point register file 610 are also capable of communicating data with the other. For one embodiment, the integer register file 608 is split into two separate register files, one register file for the low order 32 bits of data and a second register file for the high order 32 bits of data. The floating point register file 610 of one embodiment has 128 bit wide entries because floating point instructions typically have operands from 64 to 128 bits in width.

The execution block 611 contains the execution units 612, 614, 616, 618, 620, 622, 624, where the instructions are actually executed. This section includes the register files 608, 610, that store the integer and floating point data operand values that the micro-instructions need to execute. The processor 600 of one embodiment is comprised of a number of execution units: address generation unit (AGU) 612, AGU 614, fast ALU 616, fast ALU 618, slow ALU 620, floating point ALU 622, floating point move unit 624. For one embodiment, the floating point execution blocks 622, 624, execute floating point, MMX, SIMD, and SSE, or other operations. The floating point ALU 622 of one embodiment includes a 64 bit by 64 bit floating point divider to execute divide, square root, and remainder micro-ops. For embodiments of the present disclosure, instructions involving a floating point value may be handled with the floating point hardware.

In one embodiment, the ALU operations go to the high-speed ALU execution units 616, 618. The fast ALUs 616, 618, of one embodiment can execute fast operations with an effective latency of half a clock cycle. For one embodiment, most complex integer operations go to the slow ALU 620 as the slow ALU 620 includes integer execution hardware for long latency type of operations, such as a multiplier, shifts, flag logic, and branch processing. Memory load/store operations are executed by the AGUs 612, 614. For one embodiment, the integer ALUs 616, 618, 620, are described in the context of performing integer operations on 64 bit data operands. In alternative embodiments, the ALUs 616, 618, 620, can be implemented to support a variety of data bits including 16, 32, 128, 256, etc. Similarly, the floating point units 622, 624, can be implemented to support a range of operands having bits of various widths. For one embodiment, the floating point units 622, 624, can operate on 128 bits wide packed data operands in conjunction with SIMD and multimedia instructions.

In one embodiment, the uops schedulers 602, 604, 606, dispatch dependent operations before the parent load has finished executing. As uops are speculatively scheduled and executed in processor 600, the processor 600 also includes logic to handle memory misses. If a data load misses in the data cache, there can be dependent operations in flight in the pipeline that have left the scheduler with temporarily incorrect data. A replay mechanism tracks and re-executes instructions that use incorrect data. Only the dependent operations need to be replayed and the independent ones are allowed to complete. The schedulers and replay mechanism of one embodiment of a processor are also designed to catch instruction sequences for text string comparison operations.

The processor 600 also includes logic, or circuitry, to implement store address prediction for memory disambiguation according to embodiments of the disclosure. In one embodiment, the execution block 611 of processor 600 may include a store address predictor (not shown) for implementing store address prediction for memory disambiguation.

The term "registers" may refer to the on-board processor storage locations that are used as part of instructions to identify operands. In other words, registers may be those that are usable from the outside of the processor (from a programmer's perspective). However, the registers of an embodiment should not be limited in meaning to a particular type of circuit. Rather, a register of an embodiment is capable of storing and providing data, and performing the functions described herein. The registers described herein can be implemented by circuitry within a processor using any number of different techniques, such as dedicated physical registers, dynamically allocated physical registers using register renaming, combinations of dedicated and dynamically allocated physical registers, etc. In one embodiment, integer registers store thirty-two bit integer data. A register file of one embodiment also contains eight multimedia SIMD registers for packed data.

For the discussions below, the registers are understood to be data registers designed to hold packed data, such as 64 bits wide MMXTM registers (also referred to as 'mm' registers in some instances) in microprocessors enabled with MMX technology from Intel Corporation of Santa Clara, California. These MMX registers, available in both integer and floating point forms, can operate with packed data elements that accompany SIMD and SSE instructions. Similarly, 128 bits wide XMM registers relating to SSE2, SSE3, SSE4, or beyond (referred to generically as "SSEx") technology can also be used to hold such packed data operands. In one embodiment, in storing packed data and integer data, the registers do not need to differentiate between the two data types. In one embodiment, integer and floating point are either contained in the same register file or different register files. Furthermore, in one embodiment, floating point and integer data may be stored in different registers or the same registers.

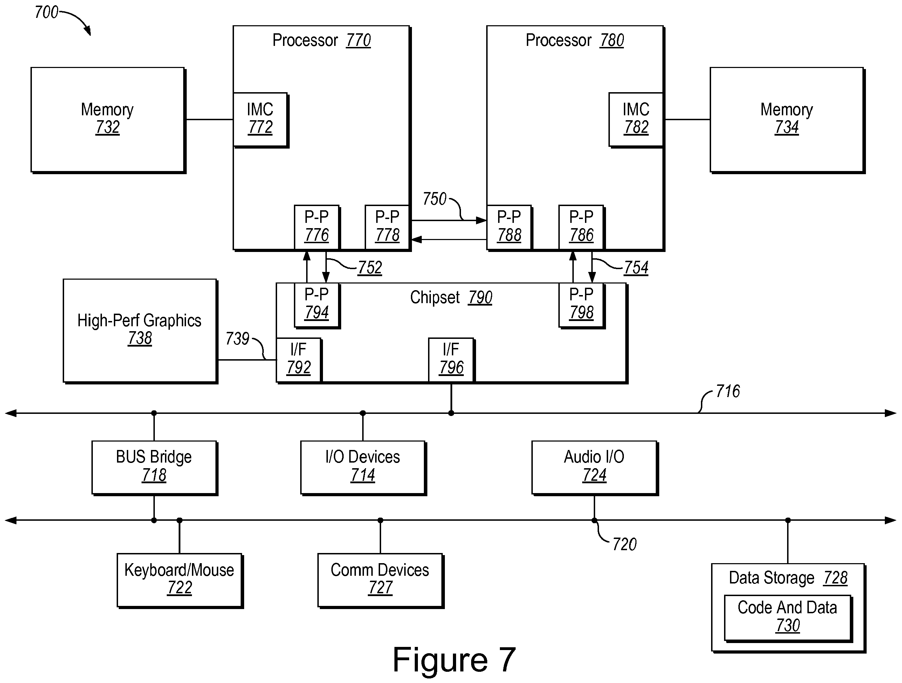

Referring now to **Figure 7****,** shown is a block diagram illustrating a system 700 in which an embodiment of the disclosure may be used. As shown in **Figure 7****,** multiprocessor system 700 is a point-to-point interconnect system, and includes a first processor 770 and a second processor 780 coupled via a point-to-point interconnect 750. While shown with only two processors 770, 780, it is to be understood that the scope of embodiments of the disclosure is not so limited. In other embodiments, one or more additional processors may be present in a given processor. In one embodiment, the multiprocessor system 700 may implement hybrid cores as described herein.

Processors 770 and 780 are shown including integrated memory controller units 772 and 782, respectively. Processor 770 also includes as part of its bus controller units point-to-point (P-P) interfaces 776 and 778; similarly, second processor 780 includes P-P interfaces 786 and 788. Processors 770, 780 may exchange information via a point-to-point (P-P) interface 750 using P-P interface circuits 778, 788. As shown in **Figure 7****,** IMCs 772 and 782 couple the processors to respective memories, namely a memory 732 and a memory 734, which may be portions of main memory locally attached to the respective processors.

Processors 770, 780 may each exchange information with a chipset 790 via individual P-P interfaces 752, 754 using point to point interface circuits 776, 794, 786, 798. Chipset 790 may also exchange information with a high-performance graphics circuit 738 via a high-performance graphics interface 739.

A shared cache (not shown) may be included in either processor or outside of both processors, yet connected with the processors via P-P interconnect, such that either or both processors' local cache information may be stored in the shared cache if a processor is placed into a low power mode.

Chipset 790 may be coupled to a first bus 716 via an interface 796. In one embodiment, first bus 716 may be a Peripheral Component Interconnect (PCI) bus, or a bus such as a PCI Express bus or another third generation I/O interconnect bus, although the scope of the present disclosure is not so limited.

As shown in **Figure 7****,** various I/O devices 714 may be coupled to first bus 716, along with a bus bridge 718 which couples first bus 716 to a second bus 720. In one embodiment, second bus 720 may be a low pin count (LPC) bus. Various devices may be coupled to second bus 720 including, for example, a keyboard and/or mouse 722, communication devices 727 and a storage unit 728 such as a disk drive or other mass storage device which may include instructions/code and data 730, in one embodiment. Further, an audio I/O 724 may be coupled to second bus 720. Note that other architectures are possible. For example, instead of the point-to-point architecture of **Figure 7****,** a system may implement a multi-drop bus or other such architecture.

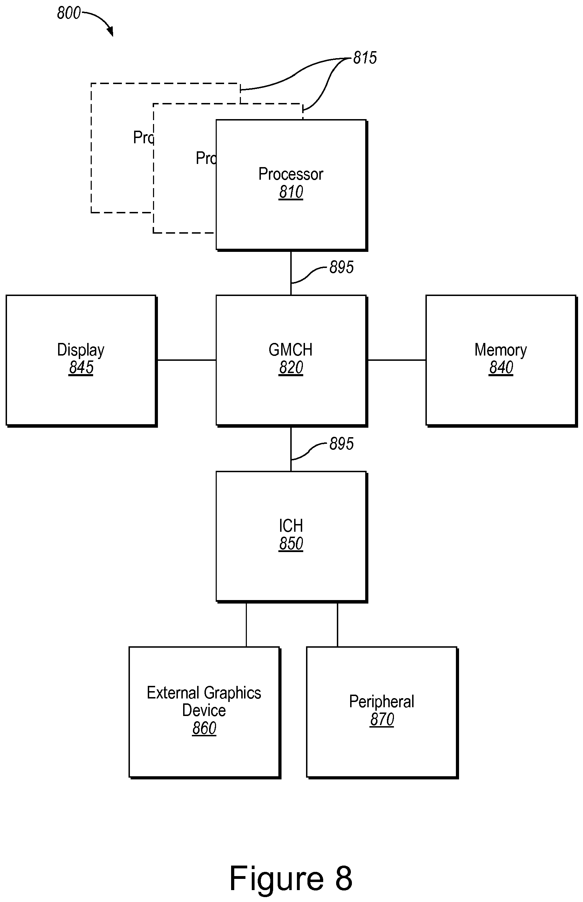

Referring now to **Figure 8****,** shown is a block diagram of a system 800 in which one embodiment of the disclosure may operate. The system 800 may include one or more processors 810, 815, which are coupled to graphics memory controller hub (GMCH) 820. The optional nature of additional processors 815 is denoted in **Figure 8** with broken lines. In one embodiment, processors 810, 815 implement hybrid cores according to embodiments of the disclosure.

Each processor 810, 815 may be some version of the circuit, integrated circuit, processor, and/or silicon integrated circuit as described above. However, it should be noted that it is unlikely that integrated graphics logic and integrated memory control units would exist in the processors 810, 815. **Figure 8** illustrates that the GMCH 820 may be coupled to a memory 840 that may be, for example, a dynamic random access memory (DRAM). The DRAM may, for at least one embodiment, be associated with a non-volatile cache.

The GMCH 820 may be a chipset, or a portion of a chipset. The GMCH 820 may communicate with the processor(s) 810, 815 and control interaction between the processor(s) 810, 815 and memory 840. The GMCH 820 may also act as an accelerated bus interface between the processor(s) 810, 815 and other elements of the system 800. For at least one embodiment, the GMCH 820 communicates with the processor(s) 810, 815 via a multi-drop bus, such as a frontside bus (FSB) 895.

Furthermore, GMCH 820 is coupled to a display 845 (such as a flat panel or touchscreen display). GMCH 820 may include an integrated graphics accelerator. GMCH 820 is further coupled to an input/output (I/O) controller hub (ICH) 850, which may be used to couple various peripheral devices to system 800. Shown for example in the embodiment of **Figure 8** is an external graphics device 860, which may be a discrete graphics device, coupled to ICH 850, along with another peripheral device 870.

Alternatively, additional or different processors may also be present in the system 800. For example, additional processor(s) 815 may include additional processors(s) that are the same as processor 810, additional processor(s) that are heterogeneous or asymmetric to processor 810, accelerators (such as, e.g., graphics accelerators or digital signal processing (DSP) units), field programmable gate arrays, or any other processor. There can be a variety of differences between the processor(s) 810, 815 in terms of a spectrum of metrics of merit including architectural, micro-architectural, thermal, power consumption characteristics, and the like. These differences may effectively manifest themselves as asymmetry and heterogeneity amongst the processors 810, 815. For at least one embodiment, the various processors 810, 815 may reside in the same die package.

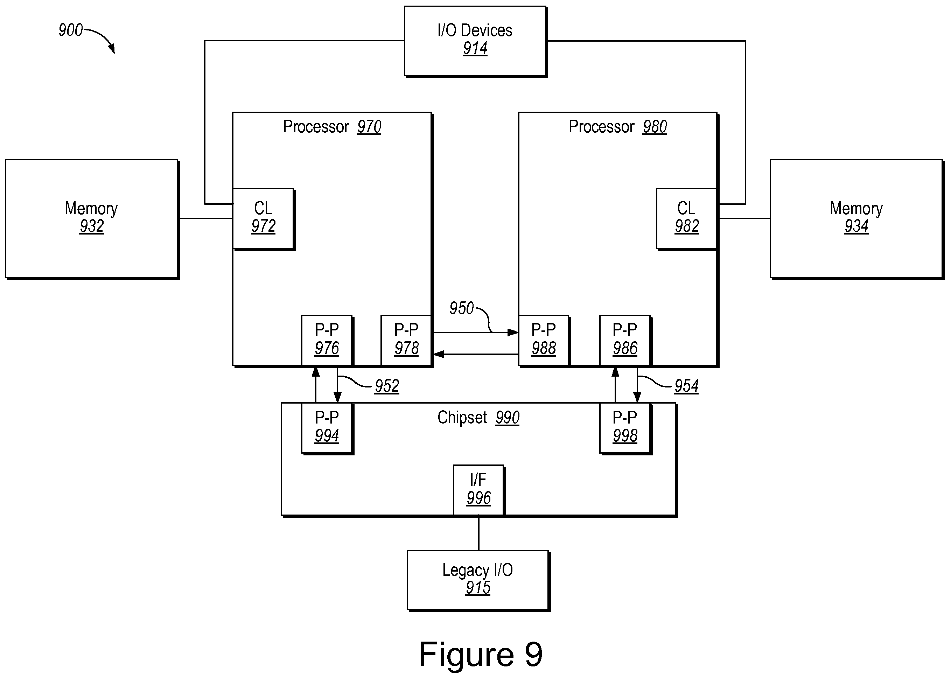

Referring now to **Figure 9****,** shown is a block diagram of a system 900 in which an embodiment of the disclosure may operate. **Figure 9** illustrates processors 970, 980. In one embodiment, processors 970, 980 may implement hybrid cores as described above. Processors 970, 980 may include integrated memory and I/O control logic ("CL") 972 and 982, respectively and intercommunicate with each other via point-to-point interconnect 950 between point-to-point (P-P) interfaces 978 and 988 respectively. Processors 970, 980 each communicate with chipset 990 via point-to-point interconnects 952 and 954 through the respective P-P interfaces 976 to 994 and 986 to 998 as shown. For at least one embodiment, the CL 972, 982 may include integrated memory controller units. CLs 972, 982 may include I/O control logic. As depicted, memories 932, 934 coupled to CLs 972, 982 and I/O devices 914 are also coupled to the control logic 972, 982. Legacy I/O devices 915 are coupled to the chipset 990 via interface 996.

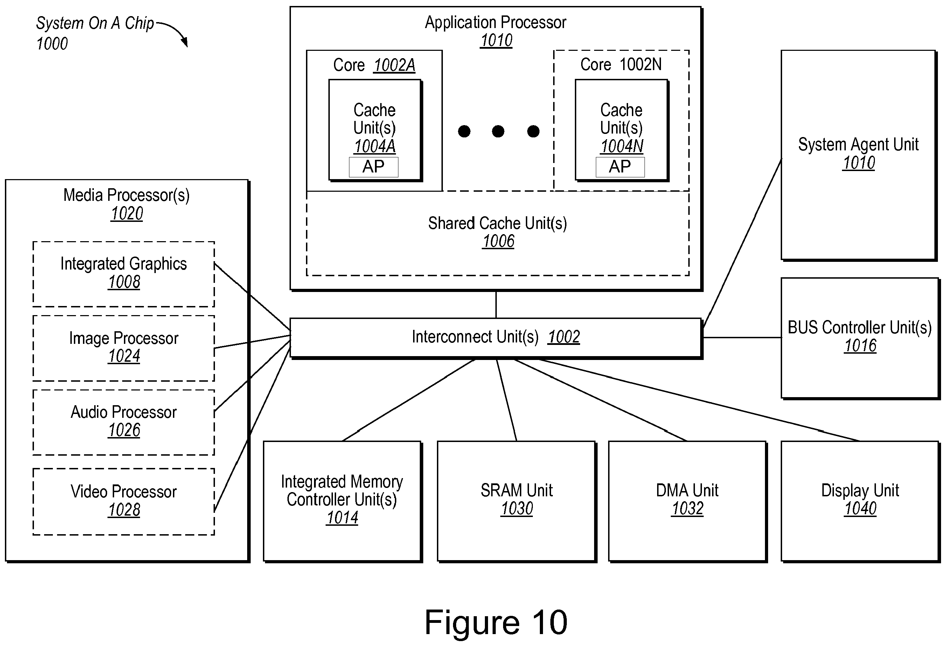

Embodiments may be implemented in many different system types. **Figure 10** is a block diagram of a SoC 1000 in accordance with an embodiment of the present disclosure. Dashed lined boxes are optional features on more advanced SoCs. In **Figure 10****,** an interconnect unit(s) 1012 is coupled to a plurality of functional units, including: an application processor 1020 which includes a set of one or more cores 1002A-N and shared cache unit(s) 1006; a system agent unit 1010; a bus controller unit(s) 1016; an integrated memory controller unit(s) 1014; a set or one or more media processors 1018 which may include integrated graphics logic 1008, an image processor 1024 for providing still and/or video camera functionality, an audio processor 1026 for providing hardware audio acceleration, and a video processor 1028 for providing video encode/decode acceleration; an static random access memory (SRAM) unit 1030; a direct memory access (DMA) unit 1032; and a display unit 1040 for coupling to one or more external displays. In one embodiment, a memory module may be included in the integrated memory controller unit(s) 1014. In another embodiment, the memory module may be included in one or more other components of the SoC 1000 that may be used to access and/or control a memory. The application processor 1020 may include a store address predictor for implementing hybrid cores as described in embodiments herein.

The memory hierarchy includes one or more levels of cache within the cores, a set or one or more shared cache units 1006, and external memory (not shown) coupled to the set of integrated memory controller units 1014. The set of shared cache units 1006 may include one or more mid-level caches, such as level 2 (L2), level 3 (L3), level 4 (L4), or other levels of cache, a last level cache (LLC), and/or combinations thereof.

In some embodiments, one or more of the cores 1002A-N are capable of multi-threading. The system agent 1010 includes those components coordinating and operating cores 1002A-N. The system agent unit 1010 may include for example a power control unit (PCU) and a display unit. The PCU may be or include logic, or circuitry, and components needed for regulating the power state of the cores 1002A-N and the integrated graphics logic 1008. The display unit is for driving one or more externally connected displays.

The cores 1002A-N may be homogenous or heterogeneous in terms of architecture and/or instruction set. For example, some of the cores 1002A-N may be in order while others are out-of-order. As another example, two or more of the cores 1002A-N may be capable of execution the same instruction set, while others may be capable of executing only a subset of that instruction set or a different instruction set.

The application processor 1020 may be a general-purpose processor, such as a Core™ i3, i5, i7, 2 Duo and Quad, Xeon™, Itanium™, Atom™ or Quark™ processor, which are available from Intel™ Corporation, of Santa Clara, Calif. Alternatively, the application processor 1020 may be from another company, such as ARM Holdings™, Ltd, MIPS™, etc. The application processor 1020 may be a special-purpose processor, such as, for example, a network or communication processor, compression engine, graphics processor, co-processor, embedded processor, or the like. The application processor 1020 may be implemented on one or more chips. The application processor 1020 may be a part of and/or may be implemented on one or more substrates using any of a number of process technologies, such as, for example, BiCMOS, CMOS, or NMOS.

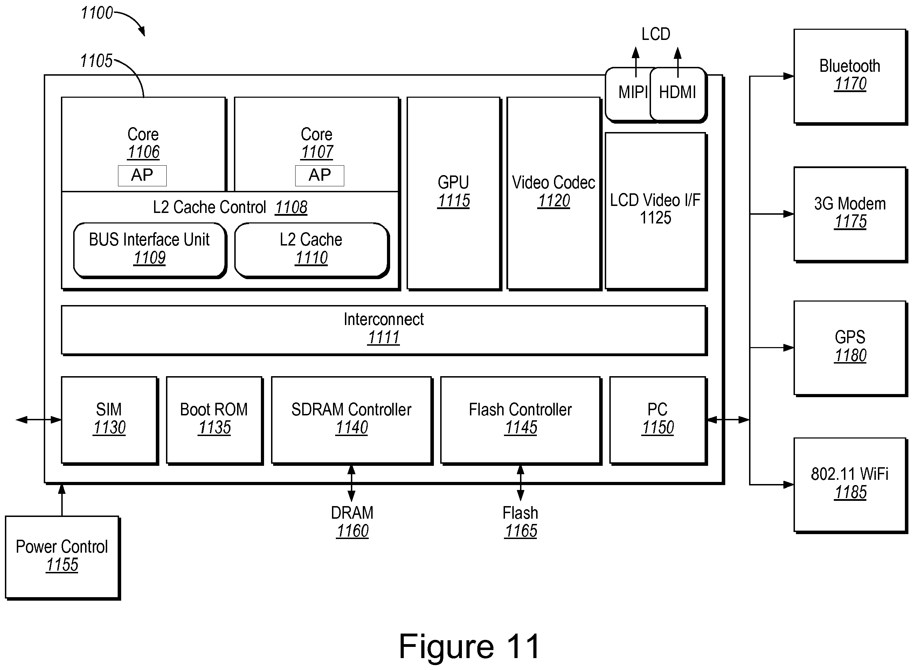

**Figure 11** is a block diagram of an embodiment of a system on-chip (SoC) design in accordance with the present disclosure. As a specific illustrative example, SoC 1100 is included in user equipment (UE). In one embodiment, UE refers to any device to be used by an end-user to communicate, such as a hand-held phone, smartphone, tablet, ultra-thin notebook, notebook with broadband adapter, or any other similar communication device. Often a UE connects to a base station or node, which potentially corresponds in nature to a mobile station (MS) in a GSM network.

Here, SOC 1100 includes 2 cores-1106 and 1107. Cores 1106 and 1107 may conform to an Instruction Set Architecture, such as an Intel® Architecture Core™-based processor, an Advanced Micro Devices, Inc. (AMD) processor, a MIPS-based processor, an ARM-based processor design, or a customer thereof, as well as their licensees or adopters. Cores 1106 and 1107 are coupled to cache control 1108 that is associated with bus interface unit 1109 and L2 cache 1110 to communicate with other parts of system 1100. Interconnect 1110 includes an on-chip interconnect, such as an IOSF, AMBA, or other interconnect discussed above, which potentially implements one or more aspects of the described disclosure. In one embodiment, cores 1106, 1107 may implement hybrid cores as described in embodiments herein.

Interconnect 1110 provides communication channels to the other components, such as a Subscriber Identity Module (SIM) 1130 to interface with a SIM card, a boot ROM 1135 to hold boot code for execution by cores 1106 and 1107 to initialize and boot SoC 1100, a SDRAM controller 1140 to interface with external memory (e.g. DRAM 1160), a flash controller 1145 to interface with non-volatile memory (e.g. Flash 1165), a peripheral control 1150 (e.g. Serial Peripheral Interface) to interface with peripherals, video codecs 1120 and Video interface 1125 to display and receive input (e.g. touch enabled input), GPU 1115 to perform graphics related computations, etc. Any of these interfaces may incorporate aspects of the disclosure described herein. In addition, the system 1100 illustrates peripherals for communication, such as a Bluetooth module 1170, 3G modem 1175, GPS 1180, and Wi-Fi 1185.

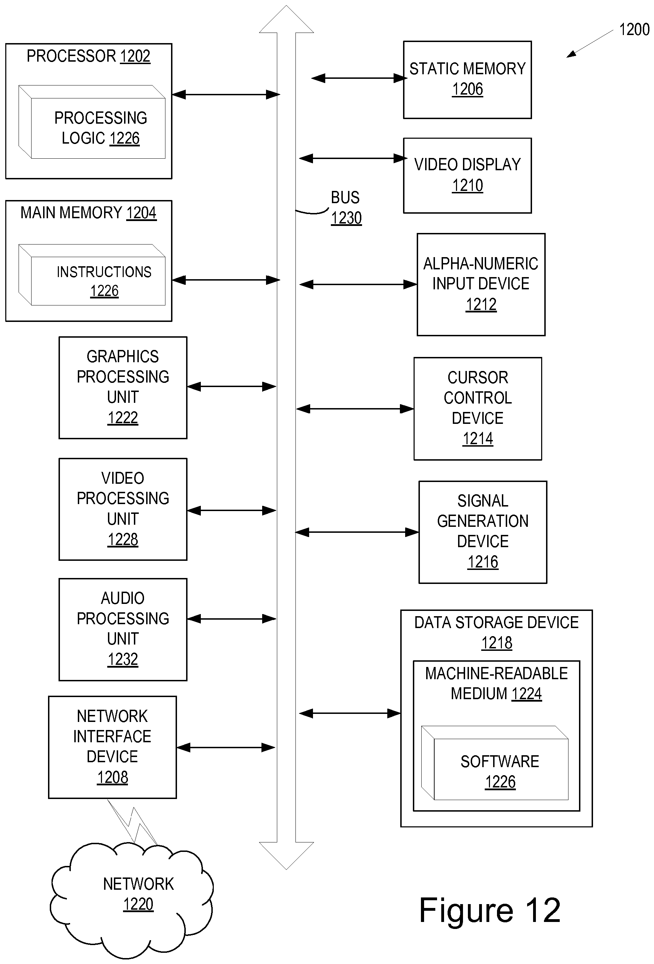

**Figure 12** illustrates a diagrammatic representation of a machine in the example form of a computer system 1200 within which a set of instructions, for causing the machine to perform any one or more of the methodologies discussed herein, may be executed. In alternative embodiments, the machine may be connected (e.g., networked) to other machines in a LAN, an intranet, an extranet, or the Internet. The machine may operate in the capacity of a server or a client device in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The computer system 1200 includes a processing device 1202, a main memory 1204 (e.g., read-only memory (ROM), flash memory, dynamic random access memory (DRAM) (such as synchronous DRAM (SDRAM) or DRAM (RDRAM), Double Data Rate (DDR), DDR2, DDR3 , Low Power DDR (LPDDR), High Bandwidth Memory (HBM), etc.), a static memory 1206 (e.g., flash memory, static random access memory (SRAM), etc.), and a data storage device 1218, which communicate with each other via a bus 1230. The above memories may be implemented in any configuration (single channel memory, dual channel memory, or rank memory (e.g., unbuffered dual in-line memory module (UDIMM )).

Processing device 1202 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 1202 may also be one or more special-purpose processing devices such as an application specific integrated circuit (ASIC), a field programmable gate array (FPGA), a digital signal processor (DSP), network processor, or the like. In one embodiment, processing device 1202 may include one or processing cores. The processing device 1202 is configured to execute the processing logic 1226 for performing the operations and steps discussed herein. In one embodiment, processing device 1202 is the same as processor architecture 100 described with respect to **Figure 1** as described herein with embodiments of the disclosure.

The computer system 1200 may further include a network interface device 1208 communicably coupled to a network 1220. The computer system 1200 also may include a video display unit 1210 (e.g., a liquid crystal display (LCD) or a cathode ray tube (CRT)), an alphanumeric input device 1212 (e.g., a keyboard), a cursor control device 1214 (e.g., a mouse), and a signal generation device 1216 (e.g., a speaker). Furthermore, computer system 1200 may include a graphics processing unit 1222, a video processing unit 1228, and an audio processing unit 1232.

The data storage device 1218 may include a machine-accessible storage medium 1224 on which is stored software 1226 implementing any one or more of the methodologies of functions described herein, such as implementing store address prediction for memory disambiguation as described above. The software 1226 may also reside, completely or at least partially, within the main memory 1204 as instructions 1226 and/or within the processing device 1202 as processing logic 1226 during execution thereof by the computer system 1200; the main memory 1204 and the processing device 1202 also constituting machine-accessible storage media.

The machine-readable storage medium 1224 may also be used to store instructions 1226 implementing store address prediction for hybrid cores such as described according to embodiments of the disclosure. While the machine-accessible storage medium 1128 is shown in an example embodiment to be a single medium, the term "machine-accessible storage medium" should be taken to include a single medium or multiple media (e.g., a centralized or distributed database, and/or associated caches and servers) that store the one or more sets of instructions. The term "machine-accessible storage medium" shall also be taken to include any medium that is capable of storing, encoding or carrying a set of instruction for execution by the machine and that cause the machine to perform any one or more of the methodologies of the present disclosure. The term "machine-accessible storage medium" shall accordingly be taken to include, but not be limited to, solid-state memories, and optical and magnetic media.

While the disclosure has been described with respect to a limited number of embodiments, those skilled in the art will appreciate numerous modifications and variations there from. It is intended that the appended claims cover all such modifications and variations as fall within the true spirit and scope of this disclosure.

A design may go through various stages, from creation to simulation to fabrication. Data representing a design may represent the design in a number of manners. First, as is useful in simulations, the hardware may be represented using a hardware description language or another functional description language. Additionally, a circuit level model with logic, or circuitry, and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic, or circuitry, includes hardware, such as transistors, registers, or other hardware, such as programmable logic devices.

Use of the phrase 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 910 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

The following examples pertain to further embodiments.

Example 1 is a method comprising 1) receiving an indication of a first cache entry to be removed from a cache, the first cache entry corresponding to a first memory address in a memory; 2) identifying, by a processor, a second memory address in the memory based at least in part on the first memory address; 3) generating a request to identify a second cache entry in the cache corresponding to the second memory address and to determine whether a removal policy is satisfied; 4) receiving a response to the request, the response comprising an indication of the second cache entry to be removed from the cache based at least in part on the request; and 5) removing the first cache entry and the second cache entry from the cache.

In Example 2, in the method of Example 1, identifying the second memory address in the memory optionally comprises identifying addresses adjacent to the first memory address in the memory from the page file access.

In Example 3, in the method of Example 1, identifying the second memory address in the memory optionally comprises 1) identifying a range of memory addresses around the first memory address to determine neighboring addresses in the page file; and 2) identifying the second memory address based on the range from the first memory address and the neighboring addresses to the first memory address in the page file.

In Example 4, the method of Example 1, the removal policy optionally comprises 1) a first indicator to indicate whether the second cache entry has been modified in the cache; and 2) a second indicator to indicate whether the second cache entry is also stored on a core of the processor.

In Example 5, the method of Example 4, receiving the response to the request optionally comprises: 1) receiving the response when: the first indicator indicates the cache entry has been modified; and 2) the second indicator indicates the second cache entry is not also stored on another cache of the core of the processor.

In Example 6, the method of Example 1, sending the request to identify the second cache entry in the cache optionally comprises 1) determining a number of lines of the cache to which to send the request; and 2) sending a request for each of the number of lines for the second cache entry.

In Example 7, the method of Example 1, optionally comprising 1) determining that the response was received as a result of the request; 2) discarding the response to suppress generation of an additional request; and 3) cause data corresponding to the first and second cache entries to the memory to be written with a single page file access.

Example 8, is a system comprising 1) a Random Access Memory (RAM) 2) a processing device operatively coupled with the RAM, the processing device comprising 3) a cache 4) and an execution unit to 5) receive an indication of a first cache entry to be removed from a cache, the first cache entry corresponding to a first memory address in a memory; 6) identify, by the processing device, a second memory address in the memory based at least in part on the first memory address; 7) send a request to identify a second cache entry in the cache corresponding to the second memory address and to determine whether a removal policy is satisfied; 8) receive a response to the request, the response comprising an indication of the second cache entry to be removed from the cache based at least in part on the request; and 9) remove the first cache entry and the second cache entry from the cache.

In Example 9, the system of Example 8, wherein to identify the second memory address in the memory, the processing device optionally to 1) identify addresses adjacent to the first memory address in the memory from the page file access.

In Example 10, the system of Example 8, wherein to identify the second memory address in the memory, the processing device optionally to 1) identify a range of memory addresses around the first memory address to determine neighboring addresses in the page file; and 2) identify the second memory address based on the range from the first memory address and the neighboring addresses to the first memory address in the page file.

In Example 11, the system of Example 8, wherein the removal policy optionally comprises 1) a first indicator to indicate whether the second cache entry has been modified in the cache; and 2) a second indicator to indicate whether the second cache entry is also stored on a core of the processing device.

In Example 12, the system of Example 11, the processing device optionally to receive the response when 1) the first indicator indicates the cache entry has been modified; and 2) the second indicator indicates the second cache entry is not also stored on another cache of the core of the processing device.

In Example 13, the system of Example 8, wherein to send the request to identify the second cache entry in the cache further, the processing device optionally to 1) determine a number of lines of the cache to which to send the request; and 2) send a request for each of the number of lines for the second cache entry.

In Example 14, the system of Example 8, the processing device optionally to 1) determine that the response was received as a result of the request; 2) discard the response to suppress generation of an additional request; and 3) cause data corresponding to the first and second cache entries to the memory to be written with a single page file access.

Example 15 is a processing device comprising 1) a cache; and 2) a cache controller, operatively coupled with the cache, the cache controller circuit to 3) receive an indication of a first cache entry to be removed from the cache, the first cache entry corresponding to a first memory address in a memory; 4) identify a second memory address in the memory based at least in part on the first memory address; 5) generate a request to identify a second cache entry in the cache corresponding to the second memory address and to determine whether a removal policy is satisfied; 6) receive a response to the request, the response comprising an indication of the second cache entry to be removed from the cache based at least in part on the request; and 7) remove the first cache entry and the second cache entry from the cache.

In Example 16, the processing device of Example 15, wherein to identify the second memory address in the cache, the processing device is optionally further to 1) identify a range of memory addresses around the first memory address to determine neighboring addresses in the page file; and 2) identify the second memory address based on the range from the first memory address and the neighboring addresses to the first memory address in the page file.

In Example 17, the processing device of Example 15, wherein the removal policy optionally comprise 1) a first indicator to indicate whether the second cache entry has been modified in the cache; and 2) a second indicator to indicate whether the second cache entry is also stored on a core of the processing device.

In Example 18, the processing device of Example 17, the cache controller circuit is optionally further to 1) receive the response when 2) the first indicator indicates the cache entry has been modified; and 3) the second indicator indicates the second cache entry is not also stored on another cache of the core of the processing device.

In Example 19, the processing device of Example 15, wherein to send a request to identify a second cache entry in the cache, the cache controller circuit is optionally further to 1) determine a number of lines of the cache to which to send the request; and 2) send a request for each of the number of lines for the second cache entry.

In Example 20, the processing device of Example 15, the cache controller circuit is optionally further to 1) determine that the response was received as a result of the request; 2) discard the response to suppress generation of an additional request; and 3) cause data corresponding to the first and second cache entries to the memory to be written with a single page file access.

Example 21 is a system on a chip (SOC) comprising 1) a plurality of functional units; and 2) a controller, coupled to the functional units, to 3) receive an indication of a first cache entry to be removed from a cache, the first cache entry corresponding to a first memory address in a memory; 4) identify a second memory address in the memory based at least in part on the first memory address; 5) send a request to identify a second cache entry in the cache corresponding to the second memory address and to determine whether a removal policy is satisfied; 6) receive a response to the request, the response comprising an indication of the second cache entry to be removed from the cache based at least in part on the request; 7) remove the first cache entry and the second cache entry from the cache; and 8) write data corresponding to the first and second cache entries to the memory with a single page file access.

**In** Example, 22, the SOC of Example 21, further comprising the subject matter of examples 8-14.

**In** Example 23, the SOC of Example 21, wherein the controller is further operable to perform the subject matter of Examples 2-7.

Example 24 is an apparatus comprising 1) means for receiving an indication of a first cache entry to be removed from a cache, the first cache entry corresponding to a first memory address in a memory; 2) means for identifying a second memory address in the memory based at least in part on the first memory address; 3) means for sending a request to identify a second cache entry in the cache corresponding to the second memory address and to determine whether a removal policy is satisfied; 4) means for receiving a response to the request, the response comprising an indication of the second cache entry to be removed from the cache based at least in part on the request; 5) means for removing the first cache entry and the second cache entry from the cache; and 6) means for writing data corresponding to the first and second cache entries to the memory with a single page file access.

In Example 25, the apparatus of Example 24, further comprising the subject matter of any of Examples 2-7.

Example 26 is an apparatus comprising 1) a memory; and 2) a processor coupled to the memory and comprising a controller, wherein the controller is configured to perform the method of any of Examples 2-7.

**In** Example 27, the apparatus of Example 26, further comprising the subject matter of any of Examples 8-14.

Example 28 is a processing device comprising 1) a memory; and 2) an execution unit, operatively coupled with the memory, to 3) receive an indication of a first cache entry to be removed from a cache, the first cache entry corresponding to a first memory address in a memory; 4) identify a second memory address in the memory based at least in part on the first memory address; 5) send a request to identify a second cache entry in the cache corresponding to the second memory address and to determine whether a removal policy is satisfied; 6) receive a response to the request, the response comprising an indication of the second cache entry to be removed from the cache based at least in part on the request; 7) remove the first cache entry and the second cache entry from the cache; and 8) write data corresponding to the first and second cache entries to the memory with a single page file access.

**In** Example 29, the processing device of Example 28, wherein the operations further comprise the subject matter of any of Examples 2-7.

The algorithms and displays presented herein are not inherently related to any particular computer or other apparatus. Various general-purpose systems may be used with programs in accordance with the teachings herein, or it may prove convenient to construct a more specialized apparatus to perform the operations. The required structure for a variety of these systems will appear from the description below. In addition, the present embodiments are not described with reference to any particular programming language. It will be appreciated that a variety of programming languages may be used to implement the teachings of the embodiments as described herein.

The above description sets forth numerous specific details such as examples of specific systems, components, methods and so forth, in order to provide a good understanding of several embodiments. It will be apparent to one skilled in the art, however, that at least some embodiments may be practiced without these specific details. In other instances, well-known components or methods are not described in detail or represented in simple block diagram format in order to avoid unnecessarily obscuring the present embodiments. Thus, the specific details set forth above are merely exemplary. Particular implementations may vary from these exemplary details and still be contemplated to be within the scope of the present embodiments.

It is to be understood that the above description is intended to be illustrative and not restrictive. Many other embodiments will be apparent to those of skill in the art upon reading and understanding the above description. The scope of the present embodiments should, therefore, be determined with reference to the appended claims, along with the full scope of equivalents to which such claims are entitled.

## Claims

1. An apparatus comprising:
a Random Access Memory (RAM); and
a processing device operatively coupled with the RAM, the processing device comprising:
a cache; and
an execution unit to:
receive an indication of a first cache entry to be removed from a cache, the first cache entry corresponding to a first memory address in a memory;
identify, by the processing device, a second memory address in the memory based at least in part on the first memory address;
generate a request to identify a second cache entry in the cache corresponding to the second memory address and to determine whether a removal policy is satisfied;
receive a response to the request, the response comprising an indication of the second cache entry to be removed from the cache based at least in part on the request; and
remove the first cache entry and the second cache entry from the cache.

2. The apparatus of claim 1, wherein to identify the second memory address in the memory, the processing device to:
identify addresses adjacent to the first memory address in the memory from the page file access.

3. The apparatus of claim 1, wherein to identify the second memory address in the memory, the processing device to:
identify a range of memory addresses around the first memory address to determine neighboring addresses in the page file; and
identify the second memory address based on the range from the first memory address and the neighboring addresses to the first memory address in the page file.

4. The apparatus of claim 1, wherein the removal policy comprises:
a first indicator to indicate whether the second cache entry has been modified in the cache; and
a second indicator to indicate whether the second cache entry is also stored on a core of the processing device.

5. The apparatus of claim 4, wherein the processing device to receive the response when:
the first indicator indicates the cache entry has been modified; and
the second indicator indicates the second cache entry is not also stored on another cache of the core of the processing device.

6. The apparatus of claim 1, wherein to send the request to identify the second cache entry in the cache, the processing device to:
determine a number of lines of the cache to which to send the request; and
send a request for each of the number of lines for the second cache entry.

7. The apparatus of claim 1, where the processing device further to:
determine that the response was received as a result of the request;
discard the response to suppress generation of an additional request; and
cause data corresponding to the first and second cache entries to the memory to be written with a single page file access.

8. An apparatus comprising means to perform a method as described in any preceding claim.

9. A machine readable storage medium comprising a plurality of instructions, when executed, to implement a method or realize an apparatus as claimed in any preceding claim.
